Europäisches Patentamt

**European Patent Office**

**Office européen des brevets**

(11) Numéro de publication: **0 178 221**
**A1**

# (12) DEMANDE DE BREVET EUROPEEN

(21) Numéro de dépôt: **85401918.9**

(22) Date de dépôt: **02.10.85**

(51) Int. Cl.⁴: **F 16 K 1/00, B 29 C 65/00**

(30) Priorité: **03.10.84 FR 8415146**

(43) Date de publication de la demande: **16.04.86**
**Bulletin 86/16**

(84) Etats contractants désignés: **AT BE CH DE GB IT LI LU NL SE**

(71) Demandeur: **ST MIHIEL S.A., 2, rue de la Marsoupe, F-55300 St. Mihiel (FR)**

(72) Inventeur: **Dumez, Roger, 9, rue du Faubourg Saint Christophe, F-55300 Saint Mihiel (FR)**

(74) Mandataire: **Kedinger, Jean-Paul et al, c/o Cabinet Malemont 42, avenue du Président Wilson, F-75116 Paris (FR)**

(54) **Robinet à clapet perfectionné et procédé de fabrication de l'obturateur d'un tel robinet.**

(57) La présente invention concerne un robinet à clapet, du type comprenant un obturateur (3) formé d'une tige de commande (4) coulissant dans le corps (1) du robinet et d'un clapet (7) en matière souple porté par un élément libre en rotation (10) qui prend appui contre un épaulement (11) de l'extrémité libre de la tige de commande.

Selon l'invention, l'élément porte-clapet (10) est constitué par une pastille d'une certaine hauteur coiffant l'extrémité libre de la tige de commande (4) en se refermant sur l'épaulement (11) de cette dernière par une lèvre (12).

L'invention a également trait à un procédé pour fabriquer l'obturateur d'un tel robinet, procédé qui consiste à utiliser une pastille (10) faite d'une matière plastique telle que du P T F E, apte à subir un fluage sous l'application d'ondes ultra-sonores et présentant une surépaisseur à sa partie haute, et on forme la lèvre (12) en soumettant la pastille à des ondes ultra-sonores.

0178221.

1

<u>Robinet à clapet perfectionné et procédé de fabrication de l'obturateur d'un tel robinet</u>

La présente invention se rapporte à un robinet à clapet, du type comprenant un obturateur formé d'une tige de commande coulissant dans le corps du robinet et d'un clapet en matière souple monté à l'extrémité libre de la tige de commande pour coopérer avec un siège aménagé à l'intérieur du corps sur le trajet de la veine fluide, ce clapet étant porté par un élément libre en rotation qui prend appui contre un épaulement de la tige de commande.

Dans les robinets connus de ce type, utilisés essentiellement comme robinets d'arrêt, de puisage ou d'arrosage, l'élément porte-clapet est constitué par un disque que l'on monte en rotation autour de la tige de commande avant de le pourvoir du clapet. En général, pour réaliser cet assemblage, on moule le clapet en caoutchouc ou autre matière souple directement autour de l'extrémité libre de la tige de commande, de telle manière qu'il enveloppe tout à la fois le disque porte-clapet et l'épaulement contre lequel celui-ci prend appui.

On connaît les avantages procurés par ce mode de formage du clapet qui simplifie grandement le montage en rotation du disque porte-clapet, élimine les vibrations au niveau du clapet et permet d'assurer une bonne étanchéité entre la veine fluide et le mécanisme de manoeuvre de la tige logé dans la tête du robinet, lorsque le clapet est en position d'ouverture totale.

Toutefois, cette opération de moulage direct du clapet autour de l'extrémité libre de la tige de commande n'est pas totalement satisfaisante en ce sens qu'elle est, d'une part, rendue compliquée et relativement longue par le fait qu'elle doit être réalisée de part et d'autre de la tige et que, d'autre part, elle produit le long du plan de joint du moule, c'est-à-dire dans un plan longitudinal de la tige de commande, une bavure qui court notamment à travers la face de contact du clapet avec le siège et risque donc d'affecter l'étanchéité entre ces derniers dans la position de fermeture du clapet.

Un autre inconvénient de cette opération de moulage réside dans le fait que si elle conduit à un résultat défectueux, et c'est souvent le cas lors du moulage du caoutchouc sur du laiton, métal dont est faite en général la tige de commande, il faut mettre au rebut l'obturateur tout entier, c'est-à-dire ses trois composants à la fois.

La présente invention se propose de remédier à ces inconvénients et, pour ce faire, elle a pour objet un robinet du type spécifié en préambule qui se caractérise en ce que son élément porte-clapet est constitué par une pastille d'une certaine hauteur coiffant l'extrémité libre de la tige de commande

2

en se refermant sur l'épaulement de cette dernière.

Plus précisément, la pastille coiffe l'extrémité libre de la tige de commande par un évidement borgne dans lequel l'épaulement de cette dernière est logé, et se referme sur celui-ci par une lèvre qui s'avance à l'intérieur de cet évidement.

Ainsi, pour fabriquer l'obturateur d'un tel robinet, on peut, selon un procédé qui fait également l'objet de la présente invention, commencer par mettre en place, et en particulier mouler, le clapet autour de la pastille dont on coiffe ensuite l'extrémité libre de la tige de commande en agissant de telle manière qu'elle se referme sur l'épaulement de cette dernière.

Plus précisément, on part d'une pastille dont l'évidement présente une paroi lisse sur toute sa hauteur et qui est faite d'une matière apte à se déformer sous l'effet d'une sollicitation extérieure appropriée et, après avoir mis en place le clapet sur la pastille, on introduit l'extrémité libre de la tige de commande dans cet évidement avant de déformer la pastille au-dessus du premier épaulement pour former la lèvre refermant la pastille sur ce dernier.

Comme on le comprendra aisément, le moulage du clapet sur la pastille, avant le montage de celle-ci sur la tige de commande, est grandement simplifié par rapport au moulage conventionnel effectué de part et d'autre de cette dernière. Il permet en outre l'utilisation d'un moule dont le plan de joint ne traverse pas la face de contact du clapet avec son siège et qui produit donc un clapet exempt de bavure dans sa partie fonctionnelle, ce clapet offrant ainsi toutes les garanties d'étanchéité en position fermée.

On notera ici que le fait de réaliser l'opération d'assemblage de l'obturateur en deux étapes, et non plus en une seule comme précédemment, ne constitue pas un handicap en ce qui concerne la durée de cette opération, puisque chaque clapet peut être moulé sur sa pastille pendant que l'on monte une autre pastille déjà pourvue de son clapet sur sa tige de commande.

Selon un mode d'exécution préféré du procédé objet de la présente invention, on utilise une pastille faite d'une matière plastique apte à subir un fluage sous l'application d'ondes ultra-sonores et présentant une surépaisseur autour de l'ouverture de son évidement et on forme la lèvre en soumettant la pastille à des ondes ultra-sonores.

L'expérience montre que cette opération d'assemblage par les

3

ultra-sons peut être exécutée presque instantanément. Si on ajoute à cela qu'elle peut facilement être automatisée à l'aide d'un équipement simple et peu onéreux, travaillant à cadence élevée et que la pastille en matière plastique est moins coûteuse que le disque en laiton utilisé jusqu'à présent, le procédé selon l'invention conduit à une réduction non négligeable du coût de fabrication des obturateurs de robinets à clapet.

Il est encore à noter que le moulage du caoutchouc sur de la matière plastique est bien plus fiable que sur du laiton, ce qui confère un avantage supplémentaire au procédé selon l'invention. De toute façon, même si le moulage du clapet sur la pastille venait à présenter un défaut, on n'aurait à mettre au rebut que l'ensemble clapet-pastille et non pas l'obturateur tout entier.

On ajoutera encore que, pour réaliser la pastille, on utilise de préférence du polytétrafluoroéthylène, qui outre le fait qu'il est tout particulièrement bien adapté pour subir un fluage sous l'effet des ondes ultra-sonores, présente un faible coefficient de frottement sur le métal, qui favorisera la rotation de la pastille autour de la tige de commande.

Selon une autre caractéristique de l'invention, on peut pourvoir la tige de commande de l'obturateur d'un deuxième épaulement qui délimite avec le premier une gorge dans laquelle est logée la lèvre de la pastille. De la sorte, le mouvement axial de la pastille par rapport à la tige sera fortement limité voire même réduit à néant et en conséquence, les vibrations du clapet en position ouverte peuvent être éliminées.

En outre, le clapet est de préférence moulé autour de la pastille de manière à se refermer autour du deuxième épaulement de la tige de l'obturateur, pour ainsi obturer l'évidement de la pastille et empêcher la formation dans celui-ci de dépôts calcaires qui pourraient entraver la rotation de la pastille.

Avantageusement, la pastille présente une partie tronconique qui se rétrécit en direction de l'ouverture de son évidement, le clapet étant moulé de manière à recouvrir entièrement cette partie tronconique. De la sorte, le clapet est retenu en toute fiabilité sur la pastille et, lorsqu'il est en position d'ouverture totale, il assure en outre, tout comme les clapets existants, l'étanchéité du mécanisme de manoeuvre de l'obturateur logé dans la tête du robinet.

Enfin, le premier épaulement de la tige de commande est défini par une collerette formée au bout de l'extrémité libre de cette dernière, cette collerette exerçant une pression uniformément répartie sur le fond de l'évidement de la pastille lorsque le clapet est placé en appui contre son siège.

Un mode de réalisation de la présente invention va maintenant être décrit uniquement à titre d'exemple non limitatif en référence aux dessins annexés dans lesquels :

- la figure 1 est une vue simplifiée en coupe longitudinale partielle d'un robinet à clapet conforme à l'invention ;

- les figures 2 et 3 sont des vues en coupe longitudinale de la pastille porte-clapet avant et après le moulage du clapet ; et

- la figure 4 est une vue en coupe illustrant le montage de la pastille sur la tige de commande de l'obturateur.

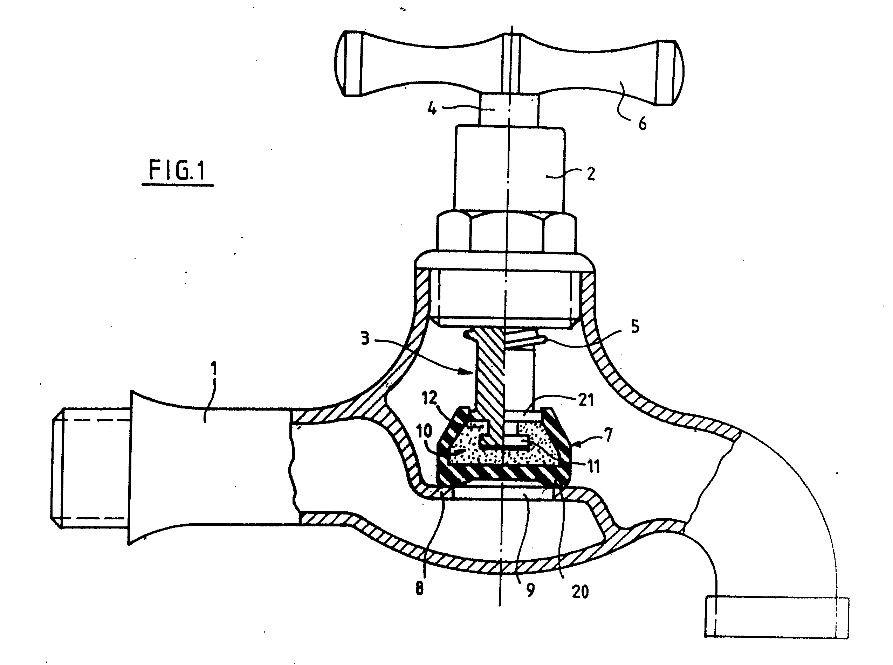

Le robinet représenté sur la figure 1 comprend tout d'abord un corps 1 de forme classique, sur lequel vient se fixer par vissage une tête 2 portant un obturateur 3. Cet obturateur 3 comprend une tige de commande 4 qui traverse de manière étanche la tête 2 et coulisse par vissage dans celle-ci grâce à une partie filetée 5. A son extrémité extérieure au corps 1, la tige de commande 4 est pourvue d'une poignée de manoeuvre 6, tandis qu'à son extrémité libre située à l'intérieur du corps 1, elle porte un clapet 7 en caoutchouc, destiné à coopérer avec un siège 8 bordant l'orifice 9 par lequel passe la veine fluide. Le clapet 7 est supporté par un élément porte-clapet 10 monté à rotation autour d'un épaulement défini par une collerette circulaire 11 formée tout au bout de l'extrémité libre de la tige de commande 4.

Selon la caractéristique première de l'invention, l'élément porte-clapet 10 est constitué par une pastille qui vient coiffer l'extrémité libre de la tige de commande 4 en se refermant par une lèvre 12 sur la collerette 11 de cette dernière.

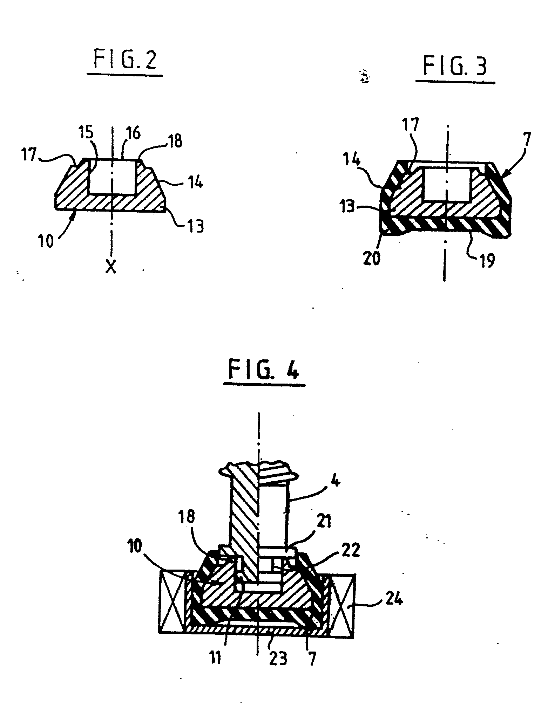

Comme le montre la figure 2, cette pastille 10 comporte une base cylindrique 13 prolongée par une partie tronconique 14 et est pourvue d'un évidement borgne 15 de section circulaire, centré autour de l'axe de symétrie X de la pastille et débouchant par une ouverture 16 sur la face circulaire 17 de la partie tronconique 14. La pastille 10 est faite en polytétrafluoroéthylène et, avant son montage sur la tige, c'est-à-dire telle qu'elle est représentée sur la figure 2, elle présente une surépaisseur 18 de cette matière, formée en relief sur la face 17, autour de l'ouverture 16 de l'évidement 15.

0178221

5

Selon une autre caractéristique de l'invention, le clapet 7 est moulé autour de la pastille 10 avant que celle-ci ne soit mise en place sur la tige 4. Ce moulage est effectué de façon tout à fait classique à l'aide d'un moule (non représenté) en deux parties dont le plan de joint se situe à hauteur de la base 13 de la pastille 10 perpendiculairement à l'axe X de celle-ci. Comme le montre la figure 3, on exécute ce moulage de telle façon que le clapet 7 enveloppe entièrement la base 13 de la pastille 10 ainsi que la partie tronconique 14 de celle-ci, jusqu'au bord de sa face circulaire 17. En outre, lors de ce moulage, on fait en sorte que le clapet 7 présente une plus grande épaisseur sur sa face 19 destinée à venir en contact avec le siège 8 que sur sa face latérale, afin qu'il puisse jouer à cet endroit le rôle d'un amortisseur. Cet effet peut être renforcé par un bourrelet 20 formé sur la circonférence de cette face 19.

En revenant à la figure 1, on peut voir que la tige de commande 4 de l'obturateur 3 porte une seconde collerette circulaire 21 de plus grand diamètre que la première et délimitant avec celle-ci une gorge 22 dans laquelle est logée la lèvre 12 de la pastille 10. Le diamètre de la collerette est en outre sensiblement égal à celui de la face 17 de la pastille 10.

Le montage de l'ensemble pastille 10-clapet 7, représenté sur la figure 2, autour de l'extrémité libre de la tige de commande 4, va maintenant être décrit en référence à la figure 4.

Dans un premier temps, la pastille 10 revêtue du clapet 7 est emboîtée dans un sabot 23 accouplé à un générateur d'ondes ultra-sonores 24. La tige de commande 4 est alors introduite par son extrémité libre portant la collerette 11, dans l'évidement 15 de la pastille 10, jusqu'à ce que sa seconde collerette 21 vienne au contact de la surépaisseur 18. Puis, la tige 4 étant maintenue dans cette position par des moyens non représentés, on met en service le générateur 24 qui applique sur la pastille 10 des ondes ultra-sonores à travers la paroi du sabot 23 et le caoutchouc du clapet 7. Sous l'action conjuguée des vibrations et de l'énergie thermique engendrées par ces ondes ultra-sonores, le polytétrafluoroéthylène va fluer au niveau de la surépaisseur 18 pour former autour de l'ouverture 16 de la pastille 10, la lèvre 12 qui vient se loger automatiquement à l'intérieur de la gorge 22.

Il va de soi que la succession d'opérations qui vient d'être décrite peut être automatisée et donc exécutée en un laps de temps très bref.

A la fin de de montage, l'ensemble pastille 10-clapet 7 est

6

parfaitement retenu en rotation à l'extrémité libre de la tige de commande 4. Cette rotation est en outre favorisée par le fait que la pastille 10 est en polytétrafluoroéthylène et que le clapet 7 se referme autour de la collerette 21 en empêchant ainsi la formation de dépôts calcaires au niveau de la zone de contact de la pastille avec la tige.

7

Revendications

1. Procédé pour fabriquer un obturateur de robinet, obturateur qui est formé d'une tige de commande (4) destinée à coulisser dans le corps (1) du robinet et d'un clapet (7) en matière souple monté à l'extrémité libre de la tige de commande en vue de coopérer avec un siège (8) aménagé à l'intérieur du corps sur le trajet de la veine fluide, ce clapet (7) étant porté par une pastille (10) d'une certaine hauteur coiffant, tout en étant libre en rotation, l'extrémité libre de la tige de commande (4) en se refermant sur un épaulement (11) formé sur cette dernière, ce procédé étant caractérisé en ce que l'on confectionne la pastille (10) à partir d'une matière apte à subir un fluage sous l'application d'ondes ultra-sonores tout en la dotant d'un évidement borgne (15) à paroi lisse, puis on met en place le clapet (7) sur la pastille (10), on introduit ensuite dans l'évidement borgne (15) de la pastille (10) l'extrémité libre de la tige de commande (4) avec son épaulement (11) et on soumet finalement l'ensemble pastille (10) - clapet (7) à des ondes ultra-sonores pour former sur la pastille une lèvre (12) se rabattant sur l'épaulement (11) de la tige de commande (4).

2. Procédé selon la revendication 1, caractérisé en ce que l'on confectionne la pastille porte-clapet (10) à partir de polytétrafluoroéthylène.

3. Procédé selon la revendication 1 ou 2, caractérisé en ce que l'on ménage une surépaisseur de matière apte à subir un fluage, autour de l'ouverture (16) de l'évidement (15) de la pastille (10) pour favoriser la formation de la lèvre (12).

4. Procédé selon l'une quelconque des revendications 1 à 3, caractérisé en ce que l'on utilise une tige de commande (4) pourvue d'un deuxième épaulement (21) qui présente une dimension transversale supérieure à celle du premier (11), et l'on introduit l'extrémité libre de la tige de commande dans l'évidement (15) de la pastille (10) jusqu'à ce que le bord de l'ouverture (16) de ce dernier vienne au contact du deuxième épaulement, si bien qu'après l'application des ondes ultra-sonores, la lèvre (12) vient remplir la gorge délimitée par les premier et deuxième épaulements (11, 21).

5. Procédé selon l'une quelconque des revendications 1 à 4, caractérisé en ce que l'on met en place le clapet (7) sur la pastille (10)

8

en le moulant directement sur cette dernière sans recouvrir l'ouverture (16) de son évidement (15).

6. Procédé selon la revendication 5, caractérisé en ce que l'on dote la pastille (10) d'une partie tronconique (14) qui se rétrécit en direction de l'ouverture (16) de son évidement (15), et on moule le clapet (7) de manière à recouvrir entièrement cette partie tronconique (14).

7. Procédé selon l'une quelconque des revendications 4 à 6, caractérisé en ce que l'on moule le clapet (7) autour de la pastille (10) de telle sorte qu'il vienne au contact du deuxième épaulement (21) de la tige de commande (4).

8. Procédé selon l'une quelconque des revendications 1 à 7, caractérisé en ce que l'on utilise une tige de commande (4) dont le premier épaulement (11) est défini par une collerette formée au bout de son extrémité libre.

9. Robinet à clapet, comprenant un obturateur qui est formé d'une tige de commande (4) destinée à coulisser dans le corps (1) du robinet et d'un clapet (7) en matière souple monté à l'extrémité libre de la tige de commande en vue de coopérer avec un siège (8) aménagé à l'intérieur du corps sur le trajet de la veine fluide, ce clapet (7) étant porté par une pastille (10) d'une certaine hauteur coiffant, tout en étant libre en rotation, l'extrémité libre de la tige de commande (4) en se refermant sur un épaulement (11) formé sur cette dernière, caractérisé en ce que l'obturateur de ce robinet est fabriqué selon le procédé défini par l'une quelconque des revendications 1 à 8.

FIG.1

0178221

2/2

### FIG.2

### FIG.3

### FIG. 4

**0178221**

Numero de la demande

Office européen
des brevets

**RAPPORT DE RECHERCHE EUROPEENNE**

EP   85 40 1918

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| Y | FR-A-2 253 960  (UTSUE VALVE CO.) <br> * Page 2, lignes 1-27 * | 1 | F 16 K    1/00 <br> B 29 C   65/00 |
| Y | FR-A-2 084 395  (J. LUCAS INDUSTRIES LTD.) <br> * Revendications 1,4 * | 1 | |
| A | GB-A-  875 446  (B.C. VON PLATEN) | | |
| A | BE-A-  473 506  (A.A. VAN GESTEL) | | |
| A | FR-A-2 315 048  (HUOT S.A.) | | |
| A | CH-A-  114 339  (J. CLARION) | | |

DOMAINES TECHNIQUES RECHERCHES (Int. Cl.4)

F 16 K
B 29 C

Le présent rapport de recherche a été établi pour toutes les revendications

| Lieu de la recherche | Date d'achèvement de la recherche | Examinateur |
|---|---|---|
| LA HAYE | 13-12-1985 | DE SMET F.P. |